# FASCICULE DE BREVET EUROPEEN

(11) **EP 3 225 223 B1**
(45) Date de publication et mention de la délivrance du brevet: **08.01.2020**
(21) Numéro de dépôt: 17161229.4
(22) Date de dépôt: 15.03.2017
(51) Int. Cl.: A61G 9/00

(54) **URINOIR MOBILE À RINÇAGE AUTONOME**
MOBILES URINAL MIT AUTOMATISCHER SPÜLUNG
MOBILE URINAL WITH AUTONOMOUS RINSING

(30) Priorité: 30.03.2016 FR 1600531
(43) Date de publication de la demande: 04.10.2017
(73) Titulaire: Rabhi, Abdelhamid, 91270 Vigneux-sur-Seine (FR)
(72) Inventeur: Rabhi, Abdelhamid, 91270 Vigneux-sur-Seine (FR)
(74) Mandataire: Koudine, Andreï

(56) Documents cités:
- EP-A2- 1 180 353
- DE-A1-102014 002 400
- US-A1- 2009 260 140
- US-A1- 2012 066 825

## Description

La présente invention concerne, de manière générale, le domaine des sanitaires et, notamment, des urinoirs mobiles à rinçage autonome.

Des appareils connus de ce type sont décrits, par exemple, dans les demandes de brevet US 2012/066825A1, US2009/260140A1.

Plus particulièrement, selon un premier de ses aspects, l'invention concerne un urinoir mobile à rinçage autonome comportant un collecteur portable adapté à recevoir l'urine et relié à un système fluidique. Ce dernier comprend :
- un premier circuit fluidique relié au collecteur portable et comprenant un liquide de rinçage, le premier circuit fluidique étant adapté à amener le liquide de rinçage dans le collecteur portable,
- un deuxième circuit fluidique relié au collecteur portable et adapté à vidanger le collecteur portable.

Ce système fluidique est adapté, dans un premier état de son fonctionnement, à pressuriser le liquide de rinçage dans le premier circuit fluidique et à délivrer ce liquide de rinçage dans le collecteur portable.

Un tel urinoir mobile Ψ à rinçage autonome est illustré sur la figure 1 et est décrit dans le brevet US 5,551,097. Il comprend notamment un collecteur portable 1 relié à un système fluidique. Ce dernier comprend un premier circuit fluidique 21 qui comporte un réservoir 2100 adapté à stocker un liquide de rinçage. Le système fluidique connu comprend également un deuxième circuit fluidique 22 relié au collecteur portable 1 et adapté à vidanger le collecteur portable 1 dans un bac de stockage 2200. Pour mettre le système fluidique connu dans un premier état de son fonctionnement, il suffit de déclencher manuellement un interrupteur électrique (non représenté sur la figure 1) qui actionne une première pompe 24 agencée dans le premier circuit fluidique 21.

Cet urinoir mobile Ψ connu est adapté pour soulager les besoins urinaires des personnes (hommes et/ou femmes) qui sont contraintes de passer plusieurs heures enfermées dans un espace confiné non équipé des sanitaires. A cette fin, ledit urinoir mobile Ψ connu peut être embarqué au bord d'un véhicule (non représenté sur la figure 1), par exemple, dans une cabine d'un véhicule automobile terrestre, dans un cockpit d'aéronef. Pour uriner, il suffit de monter le collecteur portable 1 au niveau des voies urinaires (non représentées) face au méat urinaire. L'urine recueillie dans le collecteur portable 1 arrive, grâce à la pesanteur G, dans le bac de stockage 2200 du deuxième circuit fluidique 22. Selon US 5,551,097, il est possible de rincer le collecteur portable 1 et le deuxième circuit fluidique 22 à l'aide du liquide de rinçage qui se trouve dans le réservoir 2100 du premier circuit fluidique 21, en actionnant la première pompe 24, comme expliqué ci-dessus.

Cet urinoir mobile Ψ connu peut donner satisfaction dans les cas les plus simples dans lesquels l'écoulement gravitationnel de l'urine (sous l'effet de la pesanteur G) dans le collecteur portable 1 et dans le deuxième circuit fluidique 22 n'est pas perturbé : par exemple, lorsqu'un conducteur urine pendant que son véhicule se trouve à l'arrêt ou avance avec une vitesse constante dans un plan perpendiculaire à la pesanteur G (cas d'un train ou d'un camion traversant une plaine). Cependant, en cas de perturbations induites à cet écoulement gravitationnel dans le collecteur portable 1 et dans le deuxième circuit fluidique 22, un débordement de l'urine hors du collecteur portable 1 peut se produire, ce qui est insatisfaisant. Dans l'exemple évoqué précédemment du véhicule traversant la plaine, ces perturbations peuvent être induites par des forces d'inertie agissant sur l'écoulement gravitationnel de l'urine ou du liquide de rinçage tangentiellement à la pesanteur G, en cas d'accélération ou de décélération dudit véhicule. Un autre exemple où une perturbation dudit écoulement gravitationnel est observée concerne un avion en vol en palier rectiligne uniforme qui - brusquement - chute de plusieurs dizaines de mètres en direction de la pesanteur G à cause d'une turbulence environnante.

La demande de brevet européen EP1180353A2 décrit un autre urinoir mobile à rinçage autonome (non représenté) qui permet de résoudre ce problème. Comme l'appareil selon US 5,551,097 évoqué précédemment, l'urinoir mobile à rinçage autonome selon EP1180353A2 comporte un collecteur portable adapté à recevoir l'urine et relié à un système fluidique. Ce dernier comprend :
- un premier circuit fluidique relié au collecteur portable et comprenant un liquide de rinçage, le premier circuit fluidique étant adapté à amener le liquide de rinçage dans le collecteur portable,
- un deuxième circuit fluidique relié au collecteur portable et adapté à vidanger le collecteur portable.
Le système fluidique est adapté, dans un premier état de son fonctionnement, à pressuriser le liquide de rinçage dans le premier circuit fluidique et à délivrer ce liquide de rinçage dans le collecteur portable.

Selon EP1180353A2, ce système fluidique est adapté, dans un deuxième état de son fonctionnement distinct du premier état de son fonctionnement, à induire, dans le deuxième circuit fluidique, une dépression aspirante apte à vidanger le collecteur portable. En plus, le système fluidique selon EP1180353A2 comporte une première vanne disposée dans le premier circuit fluidique.

Grâce à cet agencement, l'urinoir mobile à rinçage autonome selon EP1180353A2 permet d'éviter a priori tout débordement de l'urine hors collecteur portable : en effet, la dépression aspirante induite force l'urine à couler dans une direction privilégiée, à savoir : du collecteur portable dans le deuxième circuit fluidique uniquement, quelles que soient les perturbations extérieures (y compris en présence, par exemple, des forces d'inertie agissant transversalement par rapport à cette direction privilégiée). Cependant, l'urinoir mobile à rinçage autonome de selon EP1180353A2 présente un inconvénient : pour être efficace, il doit consommer beaucoup de liquide de rinçage. Or, cela impose la nécessité d'embarquer une grosse quantité du liquide de rinçage : initialement stockées dans le premier circuit fluidique, cette grosse quantité du liquide de rinçage est ensuite transvasée, au fur et à mesure de l'utilisation de l'urinoir mobile, dans le deuxième circuit fluidique. De ce fait, les deux circuits fluidiques (premier et deuxième) doivent être agencés pour recevoir cette grosse quantité du liquide de rinçage ce qui, *in fine,* contribue à rendre trop volumineux (et plus lourd) l'urinoir mobile selon EP1180353A2. Cela rend incommodant son installation dans l'espace confiné d'un véhicule, par exemple, dans une cabine d'un véhicule automobile terrestre, dans un cockpit d'aéronef.

La présente invention, qui s'appuie sur cette observation originale, a principalement pour but de proposer un urinoir mobile à rinçage autonome visant au moins à réduire une limitation précédemment évoquée. A cette fin, la première vanne est adaptée à réguler un débit de rinçage à travers le premier circuit fluidique. Dans ces conditions, la première vanne est ouverte lorsque le système fluidique se trouve dans le premier état de son fonctionnement. En plus, le premier circuit fluidique est flexible et le deuxième circuit fluidique est flexible.

Grâce à la première vanne sélectivement adaptée à réguler le débit de rinçage à travers le premier circuit fluidique, il est possible de maîtriser finement le débit du liquide de rinçage. Cela contribue à économiser la quantité du liquide de rinçage nécessaire pour un fonctionnement attendu de l'urinoir mobile selon l'invention. Cela le rend moins volumineux (et plus léger) car toute réduction de la quantité du liquide de rinçage présente un double avantage : en effet, elle permet de réduire non seulement un premier volume propre au premier circuit fluidique mais aussi un deuxième volume propre au deuxième circuit fluidique. En plus, la moindre quantité du liquide de rinçage rend l'urinoir mobile selon l'invention plus écologique. Enfin, le caractère flexible du premier circuit fluidique et du deuxième circuit fluidique contribue à minimiser un espace nécessaire pour ranger ces deux circuits fluidiques. Cela contribue également à minimiser un encombrement dû à l'urinoir mobile selon l'invention installé dans une cabine d'un véhicule automobile terrestre ou dans un cockpit d'aéronef. Subsidiairement, la disposition de la première vanne sélective dans le premier circuit fluidique facilite un remplacement du collecteur portable.

Le système fluidique comporte une deuxième vanne disposée dans le deuxième circuit fluidique et adaptée à réguler un débit de vidange à travers le deuxième circuit fluidique. La deuxième vanne est ouverte lorsque le système fluidique se trouve dans le deuxième état de son fonctionnement.

Cet agencement facilite le remplacement du collecteur portable.

Selon l'invention, la première vanne est fermée lorsque le système fluidique se trouve dans le deuxième état de son fonctionnement. Le système fluidique comporte une deuxième vanne disposée dans le deuxième circuit fluidique et adaptée à réguler un débit de vidange à travers le deuxième circuit fluidique. La deuxième vanne est :
- fermée lorsque le système fluidique se trouve dans le premier état de son fonctionnement, et
- ouverte lorsque le système fluidique se trouve dans le deuxième état de son fonctionnement.

Le système fluidique comporte en outre une pompe réversible adaptée à coopérer avec la première vanne et la deuxième vanne. La pompe réversible est apte à :
- pressuriser le liquide de rinçage dans le premier circuit fluidique lorsque le système fluidique se trouve dans le premier état de son fonctionnement, et
- induire la dépression aspirante dans le deuxième circuit fluidique lorsque le système fluidique se trouve dans le deuxième état de son fonctionnement.

L'unique pompe réversible pouvant agir soit sur le premier circuit fluidique, soit sur deuxième circuit fluidique contribue à minimiser le poids et/ou la taille de l'urinoir mobile selon l'invention. Cela permet d'embarquer ce dernier non seulement au bord d'un véhicule mais également de l'intégrer dans un lit d'hôpital ou dans un fauteuil roulant.

De préférence, l'urinoir mobile selon l'invention peut comporter un détecteur d'événement sélectif adapté à envoyer un signal d'alerte au système fluidique en cas de détection d'un événement sélectif. Dans ces conditions, le système fluidique est adapté à se mettre dans le deuxième état de son fonctionnement à réception du signal d'alerte provenant du détecteur d'événement sélectif.

Cet agencement élargit les possibilités fonctionnelles de l'urinoir mobile selon l'invention. Par exemple, il est possible d'adapter le fonctionnement de l'urinoir mobile et, notamment, d'induire, dans le deuxième circuit fluidique, la dépression aspirante apte à vidanger le collecteur portable en fonction d'un événement sélectif choisi, par exemple, parmi les événements sélectifs suivants : (a) identification de présence d'un méat urinaire à une distance prédéterminée du collecteur portable ; (b) identification de l'urine dans le collecteur portable ; (c) identification du liquide de rinçage dans le collecteur portable.

De préférence, le système fluidique est apte à adopter à la fois le premier état de son fonctionnement et le deuxième état de son fonctionnement.

Grâce à cet agencement, il est possible d'utiliser la dépression aspirante pour guider le liquide de rinçage directement dans le deuxième conduit fluidique. Cela rend l'évacuation dudit liquide de rinçage plus ordonnée, c'est-à-dire, plus orientée le long d'un axe privilégié du deuxième conduit fluidique ce qui contribue *in fine* à éviter tout débordement du liquide de rinçage hors du collecteur portable quelles que soient les perturbations extérieures (y compris en présence, par exemple, des forces d'inertie agissant transversalement par rapport à cet axe privilégié). Ainsi, l'urinoir mobile selon l'invention est plus facile à utiliser.

De préférence, l'urinoir mobile peut comporter :
- un contenu multimédia comprenant un enregistrement sonore propre à un ruissellement d'eau, et
- une interface d'accès à ce contenu multimédia.

Un individu (homme ou femme) contraint de passer plusieurs heures enfermé dans un espace confiné et, plus encore, celui qui y est à la fois assis et confronté à des tâches complexes (conduite d'un véhicule terrestre ; pilotage d'aéronef), peut être stressé au point de perdre une maîtrise de ses muscles internes liés à son organe urinaire. De ce fait et malgré une forte envie d'uriner, cet individu reste coincé et a du mal à produire son premier jet d'urine ce qui lui cause beaucoup de souffrance. Le Demandeur a remarqué que, de manière surprenante, un environnement sonore propre à un ruissellement d'eau produit un effet psychophysiologique bénéfique qui contribue à déstresser ces individus au point de permettre à ces individus de relaxer plus rapidement leurs muscles internes et commencer, enfin, à uriner. Grâce à une interface d'accès évoquée ci-dessus telle que, par exemple, un code-barres (notamment code-barres en deux dimensions du type « code QR »), tout individu peut, via son téléphone intelligent connecté à un réseau informatique global du type « Internet », accéder à un serveur distant avec un contenu multimédia comprenant un enregistrement sonore propre audit ruissellement d'eau. Ainsi, cet individu peut, d'une part, approcher le collecteur portable au niveau de ses voies urinaires face au méat urinaire, et, d'autre part, écouter le ruissellement d'eau reproduit par une application standard de son téléphone intelligent lisant ledit contenu multimédia. Cela contribue à produire l'effet psychophysiologique bénéfique mentionné ci-dessus : l'individu peut alors aisément relaxer ses muscles internes liés à son organe urinaire et produire à temps le premier jet d'urine. Par conséquent, l'urinoir mobile muni de ces agencements devient plus commode à utiliser.

Avantageusement, le système fluidique peut comporter un émetteur acoustique adapté, dans son état actif, à générer un environnement sonore propre à un ruissellement d'eau. Dans ces conditions, le système fluidique est adapté, dans un troisième état de son fonctionnement distinct du premier état de son fonctionnement, à activer l'émetteur acoustique.

Cet agencement vise notamment les situations où les individus contraints de passer plusieurs heures enfermées dans un espace confiné ne peuvent pas avoir accès au contenu multimédia distant évoqué ci-dessus. Ces situations peuvent se produire, par exemple, lorsque ces individus sont en panne de leurs téléphones intelligents ou se trouvent dans une zone sans accès à un réseau informatique global du type « Internet » (par exemple, au bord d'aéronef). Dans ces conditions et grâce aux agencements décrits ci-dessus, l'urinoir mobile selon l'invention propose à ses utilisateurs une solution locale qui permet de créer l'environnement sonore propre à un ruissellement d'eau à proximité immédiate du collecteur portable.

De préférence, le système fluidique peut comporter une unité centrale d'intelligence artificielle. Dans ces conditions, l'unité centrale est adapté à commander tous les états de fonctionnement du système fluidique.

Cet agencement élargit les possibilités fonctionnelles de l'urinoir mobile selon l'invention. En particulier, l'unité centrale d'intelligence artificielle libère l'utilisateur de l'urinoir mobile des tâches secondaires. De ce fait, l'utilisateur peut uriner sans détourner son attention pour modifier les états de fonctionnement de l'urinoir mobile. Cela contribue à sécuriser l'utilisation de l'urinoir mobile selon l'invention par des conducteurs de véhicules ou des pilotes d'aéronefs.

De préférence, le système fluidique comporte l'un au moins parmi les clapets suivants : (a) premier clapet anti-retour agencé dans le premier circuit fluidique et adapté à empêcher tout retour fluidique du collecteur portable au premier circuit fluidique ; (b) deuxième clapet anti-retour distinct du premier clapet anti-retour et agencé dans le deuxième circuit fluidique, le deuxième clapet anti-retour étant adapté à empêcher tout retour fluidique du deuxième circuit fluidique au collecteur portable.

Cet agencement élargit les possibilités fonctionnelles de l'urinoir mobile selon l'invention. En particulier, la présence du premier clapet anti-retour contribue à éviter tout débordement de l'urine du collecteur portable au premier circuit fluidique quelles que soient les perturbations extérieures. La présence du deuxième clapet anti-retour contribue à éviter tout débordement des eaux usées (constituées de l'urine mélangée avec le liquide de rinçage) du deuxième circuit fluidique au collecteur portable quelles que soient les perturbations extérieures. Ainsi, l'urinoir mobile selon l'invention est plus facile à utiliser.

De préférence, le premier circuit fluidique comporte :
- un réservoir adapté à stocker le liquide de rinçage, et
- un premier capteur lié à ce réservoir et adapté à émettre un deuxième signal d'alerte lorsqu'un niveau du liquide de rinçage est inférieur à un premier seuil prédéterminé.

Dans ces conditions, le système fluidique comporte une unité centrale d'intelligence artificielle. Cette unité centrale d'intelligence artificielle comporte un amplificateur relié au premier capteur. Cet amplificateur est adapté :
- à recevoir le deuxième signal d'alerte, et
- à amplifier ce deuxième signal d'alerte.

De préférence, le deuxième circuit fluidique comporte :
- un bac de stockage adapté à stocker des eaux usés constitués de l'urine mélangée avec le liquide de rinçage, et
- un deuxième capteur lié à ce bac de stockage et adapté à émettre un troisième signal d'alerte lorsqu'un niveau des eaux usées est supérieur à un deuxième seuil prédéterminé distinct du premier seuil prédéterminé.

Dans ces conditions, le système fluidique comporte une unité centrale d'intelligence artificielle. Cette unité centrale d'intelligence artificielle comporte un amplificateur relié au deuxième capteur. Cet amplificateur est adapté :
- à recevoir le troisième signal d'alerte, et
- à amplifier ce troisième signal d'alerte.

De préférence, le premier circuit fluidique comporte :
- un réservoir adapté à stocker le liquide de rinçage, et
- un premier capteur lié à ce réservoir et adapté à émettre un deuxième signal d'alerte lorsqu'un niveau du liquide de rinçage est inférieur à un premier seuil prédéterminé.

Dans ces conditions, le système fluidique comporte une unité centrale d'intelligence artificielle. Cette unité centrale d'intelligence artificielle comporte un module de communication relié au premier capteur. Ce module de communication est adapté :
- à recevoir le deuxième signal d'alerte, et
- à transmettre ce deuxième signal d'alerte vers un récepteur distant.

De préférence, le deuxième circuit fluidique comporte :
- un bac de stockage adapté à stocker des eaux usés constitués de l'urine mélangée avec le liquide de rinçage, et
- un deuxième capteur lié à ce bac de stockage et adapté à émettre un troisième signal d'alerte lorsqu'un niveau des eaux usées est supérieur à un deuxième seuil prédéterminé distinct du premier seuil prédéterminé.

Dans ces conditions, le système fluidique comporte une unité centrale d'intelligence artificielle. Cette unité centrale d'intelligence artificielle comporte un module de communication relié au deuxième capteur. Ce module de communication est adapté :
- à recevoir le troisième signal d'alerte, et
- à transmettre ce troisième signal d'alerte vers un récepteur distant.

De préférence, le deuxième circuit fluidique comporte un module d'analyse adapté à identifier au moins une caractéristique de l'urine.

Selon un deuxième de ses aspects, l'invention concerne une utilisation de l'urinoir mobile à rinçage autonome décrit ci-dessus embarqué dans l'un au moins des véhicules suivants : (a) véhicule automobile ; (b) fauteuil roulant ; (c) lit d'hôpital adapté à être déplacé ; (d) aéronef.

De préférence, ce véhicule (par exemple, un véhicule automobile) comporte au moins un habitacle adapté à transporter un usager, l'urinoir mobile à rinçage autonome et un coffre distinct de l'habitacle, ledit coffre étant adapté à transporter un bagage de l'usager. Dans ces conditions, le collecteur portable est disposé dans l'habitacle et le système fluidique est disposé au moins partiellement dans le coffre.

Cet agencement permet d'isoler le conducteur du véhicule disposé dans l'habitacle de certains éléments du système fluidique (par exemple, mettre dans le coffre un réservoir avec le liquide de rinçage et qui fait partie du premier circuit fluidique et/ou un bac de stockage adapté à stocker l'urine). Cela contribue à réduire des perturbations olfactives causées par une odeur de l'urine, à faciliter un entretien au quotidien de l'urinoir mobile à rinçage autonome et, plus généralement, à rendre ce dernier plus hygiénique.

Selon un troisième de ses aspects, l'invention concerne un procédé de fonctionnement de l'urinoir mobile à rinçage autonome décrit ci-dessus.

D'autres caractéristiques et avantages de l'invention ressortiront clairement de la description qui en est faite ci-après, à titre indicatif et nullement limitatif, en référence aux dessins annexés, dans lesquels :
- la figure 1 représente schématiquement l'urinoir mobile à rinçage autonome connu qui est décrit dans le brevet US 5,551,097,
- la figure 2 représente schématiquement une première variante de l'urinoir mobile à rinçage autonome selon l'invention,
- la figure 3 représente schématiquement une deuxième variante de l'urinoir mobile à rinçage autonome selon l'invention,
- la figure 4 représente schématiquement un exemple simplifié d'un mode privilégié d'un procédé de fonctionnement de la deuxième variante (illustrée sur la figure 3) de l'urinoir mobile à rinçage autonome selon l'invention,
- la figure 5 représente schématiquement un exemple simplifié d'un mode privilégié d'un procédé de fonctionnement de la première variante (illustrée sur la figure 2) de l'urinoir mobile à rinçage autonome selon l'invention.

L'état de l'art connu représenté sur la figure 1 a d'ores et déjà été discuté ci-dessus : sa description n'est donc pas reprise ici.

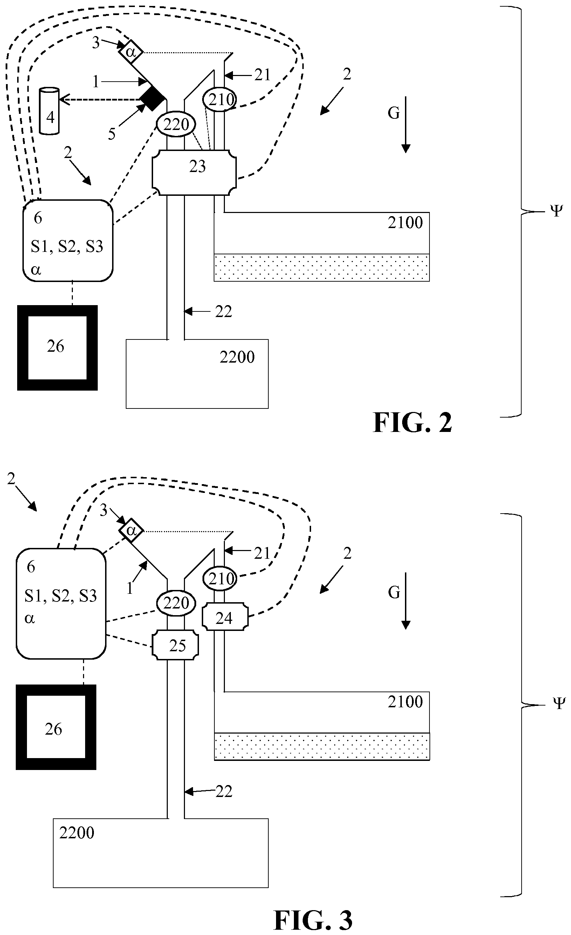

Comme annoncé précédemment et illustré sur les figures 2 à 5, l'invention concerne, selon un premier de ses aspects, un urinoir mobile Ψ à rinçage autonome comportant un collecteur portable 1 adapté à recevoir l'urine et relié à un système fluidique 2. Ce dernier comprend un premier circuit fluidique 21 relié au collecteur portable 1 et comprenant un liquide de rinçage. Le premier circuit fluidique 21 est adapté à amener le liquide de rinçage dans le collecteur portable 1. Le système fluidique 2 comprend en outre un deuxième circuit fluidique 22 relié au collecteur portable 1 et adapté à vidanger le collecteur portable 1. Le système fluidique 2 est adapté, dans un premier état S1 de son fonctionnement, à pressuriser le liquide de rinçage (dans le premier circuit fluidique 21) et à le délivrer dans le collecteur portable 1.

Le système fluidique 2 est également adapté, dans un deuxième état S2 de son fonctionnement distinct du premier état S1 de son fonctionnement, à induire, dans le deuxième circuit fluidique 22, une dépression aspirante apte à vidanger le collecteur portable 1.

Comme illustré sur les figures 2 ou 3, le système fluidique 2 comporte une première vanne 210 disposée dans le premier circuit fluidique 21.

Selon l'invention, la première vanne 210 est adaptée à réguler un débit de rinçage à travers le premier circuit fluidique 21. La première vanne 210 est ouverte lorsque le système fluidique 2 se trouve dans le premier état S1 de son fonctionnement.

De préférence, le premier circuit fluidique 21 est flexible et/ou extensible.

Cet agencement contribue à minimiser un premier espace nécessaire pour ranger le premier circuit fluidique 21, par exemple, dans un coffre (non représenté) prévu à cet effet de l'urinoir mobile Ψ à rinçage autonome.

De préférence, le deuxième circuit fluidique 22 est flexible et/ou extensible.

Cet agencement contribue à minimiser un deuxième espace nécessaire pour ranger le deuxième circuit fluidique 22, par exemple, dans le coffre (non représenté) prévu à cet effet de l'urinoir mobile Ψ à rinçage autonome.

De préférence, le système fluidique 2 peut être rangé dans le coffre (non représenté).

Cet agencement vise à protéger le système fluidique 2 contre des impacts extérieurs. Ainsi, il devient plus facile de transporter l'urinoir mobile Ψ selon l'invention.

De préférence, le collecteur portable 1 peut être rangé dans le coffre (non représenté).

Cet agencement vise à protéger le collecteur portable 1 contre des impacts extérieurs. Ainsi, il devient plus facile de transporter l'urinoir mobile Ψ selon l'invention.

Le premier circuit fluidique 21 peut comprendre un réseau de distribution d'eau (qui peut servir comme un liquide de rinçage) tandis que le deuxième circuit fluidique 22 peut comprendre un tout-à-l'égout. Cette configuration (non représentée) est particulièrement adaptée à l'utilisation de l'urinoir mobile Ψ selon l'invention dans des hôpitaux (en tant qu'un module extérieur qui peut être solidaire ou non avec, par exemple, un lit d'hôpital).

De manière alternative, le premier circuit fluidique 21 peut comprendre un réservoir 2100 adapté à stocker le liquide de rinçage tandis que le deuxième circuit fluidique 22 peut comprendre un bac de stockage 2200 adapté à stocker des eaux usées constituées de l'urine mélangée avec le liquide de rinçage (issu du collecteur portable 1 après son rinçage). Cette configuration illustrée sur les figures 2 et 3 est particulièrement adaptée à l'utilisation de l'urinoir mobile Ψ selon l'invention dans des véhicules ou des aéronefs.

De préférence, la durée du premier état S1 de fonctionnement du système fluidique 2 est égale ou inférieure à 10 secondes.

Cet agencement contribue à économiser le liquide de rinçage.

De préférence, le collecteur portable 2 comporte un filtre (non représenté sur les figures 2 et 3) adapté à retenir hors deuxième circuit fluidique 22 tout objet étranger (par exemple, des poils ou un pénis) pouvant soit endommager le deuxième circuit fluidique 22 (cas de poils qui peuvent boucher le deuxième circuit fluidique 22), soit traumatiser un usager de l'urinoir mobile Ψ (cas du pénis de l'usager aspiré dans le deuxième circuit fluidique 22).

Cet agencement contribue à rendre l'urinoir mobile Ψ à la fois plus fiable et plus sûr au quotidien.

De préférence, la première vanne 210 reste fermée lorsque le système fluidique 2 se trouve dans le deuxième état S2 de son fonctionnement.

Grâce à cet agencement, tout écoulement du liquide de rinçage est proscrit lors du deuxième état S2 de fonctionnement de l'urinoir selon l'invention. Cela contribue à économiser le liquide de rinçage.

Comme illustré sur les figures 2 ou 3, le système fluidique 2 peut comporter une deuxième vanne 220 disposée dans le deuxième circuit fluidique 22 et adaptée à réguler un débit de vidange à travers le deuxième circuit fluidique 22. La deuxième vanne 220 est ouverte lorsque le système fluidique 2 se trouve dans le deuxième état S2 de son fonctionnement.

De préférence, la deuxième vanne 220 est fermée lorsque le système fluidique se trouve dans le premier état S1 de son fonctionnement.

Grâce à cet agencement, toute aspiration forcée du liquide de rinçage du collecteur portable 1 est proscrit lors du premier état S1 de fonctionnement de l'urinoir selon l'invention. Cela permet de remplir au moins partiellement le collecteur portable 1 par le liquide de rinçage et, éventuellement, d'y le laisser pendant quelque temps pour permettre au liquide de rinçage d'agir sur une paroi interne du collecteur portable 1. De ce fait, il est possible de laver plus finement cette paroi interne du collecteur portable 1. Ainsi, cet agencement contribue à rendre l'urinoir mobile Ψ selon l'invention plus hygiénique.

Dans une première variante de réalisation illustrée sur la figure 2, la première vanne 210 est fermée lorsque le système fluidique 2 se trouve dans le deuxième état S2 de son fonctionnement. Comme évoqué précédemment, le système fluidique 2 peut comporter la deuxième vanne 220 disposée dans le deuxième circuit fluidique 22 et adaptée à réguler un débit de vidange à travers le deuxième circuit fluidique 22. Dans ces conditions, la deuxième vanne 220 est fermée lorsque le système fluidique 2 se trouve dans le premier état S1 de son fonctionnement, et est ouverte lorsque le système fluidique 2 se trouve dans le deuxième état S2 de son fonctionnement. De même, le système fluidique 2 comporte en outre une pompe réversible 23 adaptée à coopérer avec la première vanne 210 et la deuxième vanne 220. La pompe réversible 23 est apte à :
- pressuriser le liquide de rinçage dans le premier circuit fluidique 21 lorsque le système fluidique 2 se trouve dans le premier état S1 de son fonctionnement, et
- induire la dépression aspirante dans le deuxième circuit fluidique 22 lorsque le système fluidique 2 se trouve dans le deuxième état S2 de son fonctionnement.

De manière alternative, qui n'est pas conformément à l'invention et illustrée sur la figure 3, le système fluidique 2 comporte :
- une première pompe 24 adaptée à pressuriser le liquide de rinçage dans le premier circuit fluidique 21 lorsque le système fluidique 2 se trouve dans le premier état S1 de son fonctionnement, et
- une deuxième pompe 25 distincte de la première pompe 24, la deuxième pompe 25 étant adaptée à induire la dépression aspirante dans le deuxième circuit fluidique 22 lorsque le système fluidique 2 se trouve dans le deuxième état S2 de son fonctionnement.

Comme illustré sur la figure 2 ou la figure 3, l'urinoir mobile Ψ peut comporter un détecteur 3 d'événement sélectif. Ce détecteur 3 est adapté à envoyer un premier signal d'alerte α (par exemple, un premier signal d'alerte α visuel/optique et/ou sonore/acoustique, et/ou électrique) au système fluidique 2 en cas de détection d'un événement sélectif. Dans ces conditions, le système fluidique 2 est adapté à se mettre dans le deuxième état S2 de son fonctionnement à réception du premier signal d'alerte α provenant du détecteur 3 d'événement sélectif.

De préférence, l'événement sélectif est choisi, par exemple, parmi des événements sélectifs suivants : (a) identification de présence d'un méat urinaire à une distance prédéterminée du collecteur portable 1 ; (b) identification de l'urine dans le collecteur portable 1 ; (c) identification du liquide de rinçage dans le collecteur portable 1 ; (d) identification d'absence d'un méat urinaire à une distance prédéterminée du collecteur portable 1.

Le détecteur 3 d'événement sélectif peut être basé sur l'une au moins des technologies sans-contact suivantes : (a) technologie infrarouge ; (b) technologie ultrasonore ; (c) technologie inductive ; (d) technologie laser.

Cet agencement contribue à minimiser tout contact entre le collecteur portable 1 et les parties extérieures du corps humain, telles qu'un pénis. Cela contribue à rendre l'urinoir mobile Ψ selon l'invention plus hygiénique.

De préférence, le système fluidique 2 (figure 3) est apte à adopter à la fois le premier état S1 de son fonctionnement et le deuxième état S2 de son fonctionnement.

Dans une variante de réalisation l'urinoir mobile Ψ peut comporter :
- un contenu multimédia 4 comprenant un enregistrement sonore propre à un ruissellement d'eau, et
- une interface d'accès 5 à ce contenu multimédia 4.

Cette interface d'accès 5 peut se présenter comme, par exemple, une étiquette fixée (par exemple, à l'aide d'une colle ou par force magnétique) sur le collecteur portable 1. Cette étiquette peut comporter un code-barres, de préférence, un code-barres en deux dimensions (du type « code matriciel » ou « code QR » comme « *Quick Response* » en anglais) constitué de modules noirs disposés dans un carré à fond blanc : l'agencement de ces modules (et/ou leurs formes) définit une information que contient ce code-barres. L'interface d'accès 5 peut être lue (captée) par un téléphone intelligent qui comporte des applications connues aptes à lire un contenu multimédia 4 comprenant un enregistrement sonore (stocké, par exemple, sur un serveur distant accessible via un réseau informatique global du type « Internet »), propre à un ruissellement d'eau.

Comme illustré sur les figures 2 ou 3, le système fluidique 2 peut comporter un émetteur acoustique 26 adapté, dans son état actif, à générer (par exemple, à l'aide d'un contenu multimédia enregistré préalablement par l'émetteur acoustique 26) un environnement sonore propre à un ruissellement d'eau. Dans ces conditions, le système fluidique 2 est adapté, dans un troisième état S3 de son fonctionnement distinct du premier état S1 de son fonctionnement, à activer l'émetteur acoustique 26.

Cette solution acoustique « locale » utilisant l'émetteur acoustique 26 peut aussi équipée la première variante de l'invention illustrée sur la figure 2 pour élargir les possibilités fonctionnelles de l'urinoir mobile Ψ selon l'invention.

De préférence, le troisième état S3 de fonctionnement du système fluidique 2 est confondu avec le deuxième état S2 de fonctionnement du système fluidique 2.

Grâce à cet agencement, il est possible de maintenir l'environnement sonore propre à un ruissellement d'eau tout au long de l'évacuation forcée par la dépression aspirante du collecteur portable 2. Cela contribue à économiser le liquide de rinçage. Subsidiairement, cela permet de préserver l'effet psychophysiologique recherché visant à déstresser un individu urinant en cas d'une panne du premier circuit fluidique 21 et/ou suite à un épuisement du liquide de rinçage dans le premier circuit fluidique 21.

De manière alternative, dans une autre variante (non illustrée) de réalisation de l'invention, le troisième état S3 de fonctionnement du système fluidique 2 est adapté :
- à être déclenché ensemble avec le deuxième état S2 de fonctionnement du système fluidique 2, et
- à être arrêté lorsque le système fluidique 2 adopte le premier état S1 de son fonctionnement.

Cet agencement contribue à économiser une énergie électrique nécessaire pour actionner un émetteur acoustique 26 lorsque le système fluidique 2 adapte le troisième état S3 de son fonctionnement.

De préférence, le système fluidique 2 peut comporter une unité centrale 6 d'intelligence artificielle. Dans ces conditions, l'unité centrale 6 est adaptée à commander tous les états (par exemple, le premier état S1, le deuxième état S2 et le troisième état S3) de fonctionnement du système fluidique 2.

L'unité centrale 6 d'intelligence artificielle peut se présenter comme un calculateur, de préférence, muni d'une unité centrale de traitement, dite CPU (en anglais Central Processing Unit), par exemple, multitâche, et comportant des moyens de mémorisation pour enregistrer des données et/ou des informations ainsi qu'une interface homme-machine adaptée à programmer un niveau attendu de l'intelligence artificielle (et, notamment, les états S1, S2, S3 de fonctionnement du système fluidique 2 qu'elle peut adresser).

De préférence, l'unité centrale 6 d'intelligence artificielle est adaptée à contrôler la durée du premier état S1 de fonctionnement du système fluidique 2.

Cet agencement contribue à rendre l'urinoir mobile Ψ selon l'invention plus conviviale.

De préférence, l'unité centrale 6 d'intelligence artificielle est adaptée à ordonner la mise du système fluidique 2 dans le premier état S1 de fonctionnement après un laps de temps prédéterminé depuis le démarrage du deuxième état S2 de fonctionnement du système fluidique 2.

Cet agencement contribue à économiser le liquide de rinçage.

De préférence, ce laps de temps prédéterminé entre le début (déclenchement) du premier état S1 de fonctionnement et le début (déclenchement) du deuxième état S2 de fonctionnement du système fluidique 2 est égal ou inférieur à 30 secondes.

Cet agencement contribue à économiser le liquide de rinçage.

De préférence, le système fluidique 2 peut comporter l'un au moins parmi les clapets suivants (non représentés) : (a) premier clapet anti-retour (non représenté) agencé dans le premier circuit fluidique 21 et adapté à empêcher tout retour fluidique du collecteur portable 1 au premier circuit fluidique 21 ; (b) deuxième clapet anti-retour (non représenté) distinct du premier clapet anti-retour et agencé dans le deuxième circuit fluidique 22, le deuxième clapet anti-retour étant adapté à empêcher tout retour fluidique du deuxième circuit fluidique 22 au collecteur portable 1.

De préférence, lorsque le premier circuit fluidique 21 comporte le réservoir 2100, comme évoqué ci-dessus, le premier circuit fluidique 21 peut également comporter un premier capteur (non représenté) lié à ce réservoir 2100 et adapté à émettre un deuxième signal d'alerte (par exemple, un deuxième signal d'alerte visuel/optique et/ou sonore/acoustique, et/ou électrique) lorsqu'un niveau du liquide de rinçage est inférieur à un premier seuil prédéterminé.

Cet agencement facilite un entretien quotidien de l'urinoir mobile Ψ selon l'invention.

De préférence, lorsque le deuxième circuit fluidique 22 comporte le bac de stockage 2200, comme évoqué ci-dessus, le deuxième circuit fluidique 22 peut également comporter un deuxième capteur (non représenté) lié à ce bac de stockage 2200 et adapté à émettre un troisième signal d'alerte (par exemple, un troisième signal d'alerte visuel/optique et/ou sonore/acoustique, et/ou électrique) lorsqu'un niveau des eaux usés constituées de l'urine mélangée au liquide de rinçage (issu du collecteur portable 1 après son rinçage) est supérieur à un deuxième seuil prédéterminé (distinct du premier seuil prédéterminé évoqué ci-dessus).

Cet agencement facilite l'entretien quotidien de l'urinoir mobile Ψ selon l'invention.

De préférence, l'urinoir mobile Ψ comporte un premier enrouleur (non représenté) et le premier circuit fluidique 21 comporte au moins une première partie flexible et/ou extensible (non représentée) adaptée à être enroulée sur ce premier enrouleur.

Cet agencement facilite un emplacement de l'urinoir mobile Ψ selon l'invention dans un espace confiné, par exemple, dans une cabine (habitacle) de véhicule ou d'aéronef.

De préférence, l'urinoir mobile Ψ comporte un deuxième enrouleur (non représenté) et le deuxième circuit fluidique 22 comporte au moins une deuxième partie flexible et/ou extensible (non représentée) adaptée à être enroulée sur ce deuxième enrouleur.

Cet agencement facilite l'emplacement de l'urinoir mobile Ψ selon l'invention dans un espace confiné, par exemple, dans une cabine (habitacle) de véhicule ou d'aéronef.

De préférence, le premier enrouleur et le deuxième enrouleur sont confondus.

Cet agencement facilite l'emplacement de l'urinoir mobile Ψ selon l'invention dans un espace confiné, par exemple, dans une cabine (habitacle) de véhicule ou d'aéronef.

De préférence, le collecteur portable 1 comporte un moyen de fixation (par exemple, un crochet disposé sur une paroi extérieure du collecteur portable 1) adapté à fixer le collecteur portable 1 à un support (par exemple, sur un lit d'hôpital ou sur un fauteuil roulant).

Cet agencement élargit les possibilités fonctionnelles de l'urinoir mobile Ψ selon l'invention et facilite son utilisation au quotidien aux personnes à mobilité réduite.

De préférence, l'urinoir mobile Ψ selon l'invention comporte un module d'alimentation (non représenté) en énergie électrique adapté à alimenter en énergie électrique l'un au moins des moyens suivants : (a) première vanne 210 ; (b) deuxième vanne 220 ; pompe réversible 23 ; (c) première pompe 24 ; (d) deuxième pompe 25 ; (e) détecteur 3 d'événement sélectif ; (f) émetteur acoustique 26 ; (g) unité centrale 6 d'intelligence artificielle ; (i) premier capteur ; (j) deuxième capteur.

Cet agencement élargit les possibilités fonctionnelles de l'urinoir mobile Ψ selon l'invention et facilite son utilisation au quotidien.

De préférence, le module d'alimentation en énergie électrique est confondu avec un réseau fixe d'alimentation électrique.

Cet agencement élargit les possibilités fonctionnelles de l'urinoir mobile Ψ selon l'invention dans le cas où un tel réseau fixe d'alimentation électrique existe, par exemple, à l'hôpital.

De préférence, le module d'alimentation en énergie électrique peut comporter une batterie (y compris une batterie rechargeable).

Cet agencement élargit les possibilités fonctionnelles dans le cas où l'urinoir mobile Ψ selon l'invention est embarqué, par exemple, sur un fauteuil roulant.

De préférence, la batterie (y compris la batterie rechargeable) présente au moins l'un des voltages suivants : (a) 6 Volts ; (b) 12 Volts ; (c) 24 Volts ; (d) 36 Volts.

Cet agencement contribue à sécuriser l'urinoir mobile Ψ selon l'invention sur le plan électrique et évite à un usager toute décharge électrique nocive pour sa santé.

Un réceptacle anatomique (non représenté) apte à coopérer avec un corps féminin au niveau des voies urinaires peut être agencé (par vissage, par collage) sur le collecteur portable 1 à l'opposé de son premier orifice orienté vers le deuxième circuit fluidique 22.

Cet agencement contribue à rendre plus aisée l'utilisation de l'urinoir mobile Ψ selon l'invention par des femmes.

De préférence, le collecteur portable 1 comporte un deuxième orifice orienté vers l'extérieur, à l'opposé de son premier orifice. Dans ces conditions, le premier circuit fluidique 22 comporte un tuyau percé en plusieurs endroits qui épouse au moins partiellement ce deuxième orifice, en longeant la paroi intérieure du collecteur portable 1 orientée vers le deuxième circuit fluidique 22. Chaque perçage du tuyau est adapté à délivrer le liquide de rinçage le long de la paroi interne du collecteur portable 1 en direction du premier orifice lorsque le système fluidique 2 se trouve dans le premier état S1 de son fonctionnement.

Grâce à cet agencement, le premier circuit fluidique 21 est apte à délivrer le liquide de rinçage le long de la paroi interne du collecteur portable 1 de sorte à ce qu'aucune gouttelette du liquide de rinçage ne soit envoyée vers un centre géométrique du collecteur portable 1. Cet agencement permet d'éviter à mouiller par le liquide de rinçage (qui peut être chimiquement agressif) le pénis introduit vers le centre géométrique du collecteur portable 1. Cela contribue à sécuriser l'urinoir mobile Ψ selon l'invention.

De préférence, l'unité centrale 6 d'intelligence artificielle du système fluidique 2 est adaptée à coopérer (en recevant des signaux et/ou en émettant des commandes) avec l'un au moins des moyens suivants : (a) première vanne 210 ; (b) deuxième vanne 220 ; (c) pompe réversible 23 ; (d) première pompe 24 ; (e) deuxième pompe 25 ; (f) détecteur 3 d'événement sélectif ; (g) émetteur acoustique 26 ; (h) premier capteur ; (i) deuxième capteur.

Cet agencement contribue à élargir les possibilités fonctionnelles de l'urinoir mobile Ψ selon l'invention.

De préférence, l'unité centrale 6 d'intelligence artificielle du système fluidique 2 peut comporter un amplificateur (non représenté) du type acoustique, et/ou électrique, et/ou visuel/optique apte :
- à recevoir l'un au moins parmi les signaux d'alerte suivants : (a) le deuxième signal d'alerte provenant du premier capteur ; (b) le troisième signal d'alerte provenant du deuxième capteur, et
- à amplifier l'un au moins parmi les signaux d'alerte suivants : (a) le deuxième signal d'alerte provenant du premier capteur ; (b) le troisième signal d'alerte provenant du deuxième capteur.

Cet agencement élargit les possibilités fonctionnelles de l'urinoir mobile selon l'invention. En particulier, l'amplificateur rend plus facile une maintenance de l'urinoir mobile selon l'invention placé dans un environnement sonore brouillant (par exemple, dans un cockpit d'aéronef). Par exemple, une fois reçu et amplifié, le deuxième signal d'alerte (et/ou le troisième signal d'alerte) devient plus facile à identifier par l'utilisateur de l'urinoir mobile selon l'invention ou par tout tiers en charge de la maintenance de l'urinoir mobile selon l'invention dans un état de fonctionnement attendu. Hormis le cas de l'environnement sonore brouillant, cet agencement est particulièrement utile pour un utilisateur handicapé de l'urinoir mobile selon l'invention qui éprouve une difficulté pour appeler une infirmière afin de lui signaler un manque du liquide de rinçage dans le réservoir 2100 et/ou un bac de stockage 2200 présentant un état de trop-plein.

De préférence, l'unité centrale 6 d'intelligence artificielle du système fluidique 2 peut comporter un module de communication (non représenté) du type acoustique, et/ou électrique, et/ou visuel/optique apte :
- à recevoir l'un au moins parmi les signaux d'alerte suivants : (a) le deuxième signal d'alerte provenant du premier capteur ; (b) le troisième signal d'alerte provenant du deuxième capteur,
- à transmettre l'un au moins parmi les signaux d'alerte suivants : (a) le deuxième signal d'alerte provenant du premier capteur ; (b) le troisième signal d'alerte provenant du deuxième capteur, vers un récepteur distant (non représenté) : par exemple, vers un haut-parleur, un ordinateur (ou un serveur), vers un gyrophare etc.

Cet agencement élargit les possibilités fonctionnelles de l'urinoir mobile selon l'invention. En particulier, le module de liaison permet de recevoir et de transmettre le deuxième signal d'alerte et/ou le troisième signal d'alerte vers le récepteur distant, par exemple, vers un poste central d'un service des infirmiers dans un hôpital où se trouvent des utilisateurs handicapés de l'urinoir mobile selon l'invention qui sont répartis dans des différentes pièces.

Dans une variante de réalisation, le module de communication est apte à transmettre l'un au moins parmi les signaux d'alerte suivants : (a) le deuxième signal d'alerte provenant du premier capteur ; (b) le troisième signal d'alerte provenant du deuxième capteur, vers le récepteur distant par la voie filaire.

Cet agencement élargit les possibilités fonctionnelles de l'urinoir mobile selon l'invention. En particulier, la communication filaire est particulièrement fiable : elle est notamment adapté à transmettre ledit (deuxième ou troisième) signal d'alerte dans un environnement protégé d'un aéronef, par exemple, d'un cockpit où se trouve l'urinoir mobile selon l'invention vers un poste des hôtesses de l'air.

Dans une autre variante de réalisation, le module de communication est apte à transmettre l'un au moins parmi les signaux d'alerte suivants : (a) le deuxième signal d'alerte provenant du premier capteur ; (b) le troisième signal d'alerte provenant du deuxième capteur, vers le récepteur distant à l'aide des technologies de transmission du signal sans fil du type « WiFi », « Blue Tooth », « GSM », « Glonass ».

Cet agencement élargit les possibilités fonctionnelles de l'urinoir mobile selon l'invention. En particulier, la communication sans fil permet d'intégrer (connecter) aisément l'urinoir mobile selon l'invention aux réseaux et/ou aux appareils distants sans faire appel à des travaux d'infrastructure.

Le deuxième circuit fluidique 22 peut comporter un module d'analyse (non représenté) adapté à identifier au moins une caractéristique de l'urine. Cette caractéristique peut être de nature physique, c'est-à-dire, peut se rapporter à l'un des paramètres physiques définissant, par exemple, une couleur de l'urine, son aspect transparent (ou trouble). Cette caractéristique peut être de nature chimique, c'est-à-dire, peut se rapporter à l'un des paramètres chimiques définissant, par exemple, son potentiel hydrogène, dit « pH ». Cette caractéristique peut être de nature biologique et/ou cytobactériologique, c'est-à-dire, peut se rapporter à un examen de biologie médicale visant à détecter, par exemple, une infection et/ou un état particulier de l'organisme de l'utilisateur de l'urinoir mobile à rinçage autonome (par exemple, son état de grossesse, son état drogué etc.).

Cet agencement élargit les possibilités fonctionnelles de l'urinoir mobile selon l'invention : ce dernier peut donc être considéré comme un outil de sécurité (aérienne, routière, maritime). Par exemple, il devient possible de tester un état de santé d'un pilote après son installation dans un cockpit de l'avion, ou d'un conducteur après son installation dans un véhicule etc.

De préférence, ce module d'analyse comporte un troisième capteur adapté à analyser ladite caractéristique de l'urine en temps réel.

Cet agencement contribue à renforcer une fiabilité des résultats d'analyse basée sur une mesure en temps réel à l'aide du troisième capteur.

De préférence, ce module d'analyse est à l'usage unique.

Cet agencement contribue à renforcer une fiabilité des résultats d'analyse basée sur un prélèvement unitaire (jetable) répondant aux normes hygiéniques et qui ne peut pas être influencé par des contaminations dues notamment aux restes du liquide de rinçage.

Ce module d'analyse (et, notamment, son troisième capteur) peut être relié à l'unité centrale 6 d'intelligence artificielle du système fluidique 2 et, en particulier, à son amplificateur et/ou à son module de communication.

Cet agencement élargit les possibilités fonctionnelles de l'urinoir mobile selon l'invention : ce dernier peut donc communiquer les résultats d'analyse vers l'extérieur à l'aide de l'amplificateur et/ou du module de communication.

Dans la première variante de réalisation de l'urinoir mobile Ψ à rinçage autonome représentée schématiquement sur la figure 2 (avec l'unique pompe réversible 23 décrite ci-dessus), ce module d'analyse peut être disposé sur le deuxième circuit fluidique 22 entre le collecteur portable 1 et la pompe réversible 23 (de préférence, entre la deuxième vanne 220 et la pompe réversible 23).

Cette disposition du module d'analyse contribue à renforcer une fiabilité des résultats d'analyse basée sur un échantillon de l'urine qui n'a subi aucun malaxage dans la pompe réversible 23.

De préférence, le deuxième circuit fluidique 22 comporte une conduite (non représentée) de dérivation (ou de contournement), dit « by-pass » en anglais, entre le collecteur portable 1 et la pompe réversible 23 (de préférence, entre la deuxième vanne 220 et la pompe réversible 23). Dans ces conditions, le module d'analyse est installé sur (ou dans) cette conduite de dérivation (ou de contournement).

Cet agencement contribue à renforcer une fiabilité des résultats d'analyse basée sur un échantillon de l'urine prélevé dans cette conduite de dérivation (ou de contournement).

De préférence, cette conduite de dérivation (ou de contournement) est à l'usage unique.

Cet agencement contribue à renforcer une fiabilité des résultats d'analyse basée sur un prélèvement unitaire (jetable) répondant aux normes hygiéniques et qui ne peut pas être influencé par des contaminations dues notamment aux restes du liquide de rinçage.

De préférence, le deuxième circuit fluidique 22 comporte une conduite (non représentée) de dérivation (ou de contournement), dit « by-pass » en anglais, entre le collecteur portable 1 et la deuxième pompe 25 (de préférence, entre la deuxième vanne 220 et la deuxième pompe 25). Dans ces conditions, le module d'analyse est installé sur (ou dans) cette conduite de dérivation (ou de contournement).

Cet agencement contribue à renforcer une fiabilité des résultats d'analyse basée sur un échantillon de l'urine prélevé dans cette conduite de dérivation (ou de contournement).

De préférence, cette conduite de dérivation (ou de contournement) est à l'usage unique.

Cet agencement contribue à renforcer une fiabilité des résultats d'analyse basée sur un prélèvement unitaire (jetable) répondant aux normes hygiéniques et qui ne peut pas être influencé par des contaminations dues notamment aux restes du liquide de rinçage.

Selon un deuxième de ses aspects (non représenté sur les figures 2 à 4), l'invention concerne une utilisation de l'urinoir mobile à rinçage autonome décrit ci-dessus et embarqué dans l'un au moins des véhicules suivants : (a) véhicule automobile ; (b) fauteuil roulant ; (c) lit d'hôpital adapté à être déplacé ; (d) aéronef.

De préférence, ce véhicule comporte au moins un habitacle adapté à transporter un usager l'urinoir mobile Ψ à rinçage autonome et un coffre adapté à transporter un bagage. Dans ces conditions, le collecteur portable est disposé dans l'habitacle et le système fluidique est disposé au moins partiellement dans le coffre.

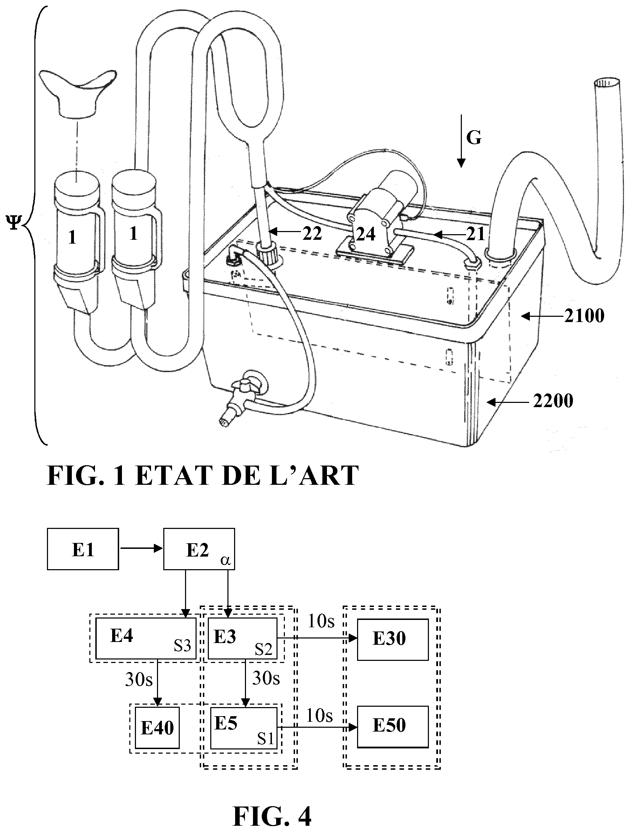

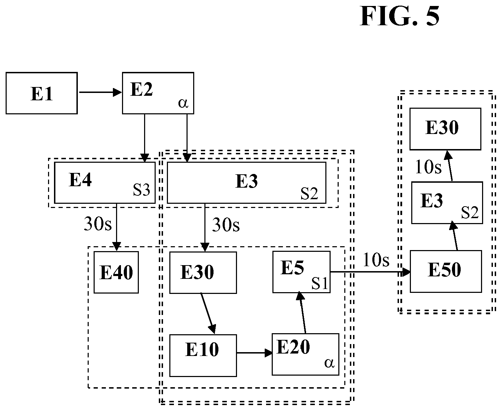

Comme annoncé précédemment et illustré sur les figures 4 et 5, selon un troisième de ses aspects, l'invention concerne également un procédé de fonctionnement de l'urinoir mobile Ψ à rinçage autonome.

Pour soulager ses besoins urinaires, il suffit à un utilisateur (homme ou femme) de l'urinoir mobile Ψ selon l'invention de saisir le collecteur portable 1 par la main, puis monter le collecteur portable 1 au niveau des voies urinaires (non représentées) face au méat urinaire (non représenté).

La figure 4 représente schématiquement un exemple simplifié d'un mode privilégié du procédé de fonctionnement de l'urinoir mobile Ψ à rinçage autonome selon sa deuxième variante de réalisation représentée schématiquement sur la figure 3 (avec la première pompe 24 et la deuxième pompe 25 décrites ci-dessus).

Cet urinoir mobile Ψ à rinçage autonome détecte E1, par l'intermédiaire du détecteur 3 d'événement sélectif, la présence du méat urinaire à proximité (à une distance prédéterminée) du collecteur portable 1. Un premier signal d'alerte α propre à la présence du méat urinaire à proximité du collecteur portable 1 est donc envoyé E2 par le détecteur 3 à l'unité centrale 6 d'intelligence artificielle du système fluidique 2. En réponse à ce premier signal d'alerte α propre à la présence du méat urinaire à proximité du collecteur portable 1, l'unité centrale 6 met E3 le système fluidique 2 dans le deuxième état S2 de son fonctionnement : une dépression aspirante apte à vidanger le collecteur portable 1 est alors induite par la deuxième pompe 25.

De préférence, en même temps (c'est-à-dire, en réponse à ce premier signal d'alerte α propre à la présence du méat urinaire à proximité du collecteur portable 1), l'unité centrale 6 met E4 le système fluidique 2 dans le troisième état S3 de son fonctionnement : l'émetteur acoustique 26 est alors activé pour créer un environnement sonore propre à un ruissellement d'eau. L'utilisateur ainsi déstressé urine dans le collecteur portable 1.

Après une période de temps prédéterminée (suffisante pour uriner), par exemple, trente secondes après le déclenchement du deuxième état S2 de fonctionnement système fluidique 2, l'unité centrale 6 :
- met E5 le système fluidique 2 dans le premier état S1 de son fonctionnement pour commencer à rincer le collecteur portable 1 (à l'aide de la première pompe 24), et,
- arrête E40 le troisième état S3 de fonctionnement du système fluidique 2 pour des raisons d'économie d'énergie.

Pendant les dix secondes qui suivent le déclenchement du premier état S1 de son fonctionnement, le système fluidique 2 se trouve donc dans les deux états de son fonctionnement à la fois :
- dans le premier état S1 de son fonctionnement (rinçage du collecteur portable 1 à l'aide du liquide de rinçage pressurisé sortant du premier circuit fluidique 21 sous l'action de la première pompe 24), et
- dans le deuxième état S2 de son fonctionnement (vidange forcé du collecteur portable 1 à l'aide de la dépression aspirante dans le deuxième circuit fluidique 22 à l'aide de la deuxième pompe 25).

Une fois ces 10 secondes écoulées, l'unité centrale 6 :
- arrête E50 le premier état S1 de fonctionnement du système fluidique 2 (en ordonnant une mise à l'arrêt de la première pompe 24), et
- arrête E30 le deuxième état S2 de fonctionnement du système fluidique 2 (en ordonnant une mise à l'arrêt de la deuxième pompe 25).
L'utilisateur soulagé éloigne le collecteur portable 1 de son méat urinaire, puis range le collecteur portable 1, par exemple, en l'accrochant sur un support tel qu'un fauteuil roulant.

Dès que l'utilisateur souhaite uriner de nouveau, ce cycle recommence.

La figure 5 représente schématiquement un exemple simplifié d'un autre mode privilégié du procédé de fonctionnement de l'urinoir mobile Ψ à rinçage autonome selon sa première variante de réalisation représentée schématiquement sur la figure 2 (avec l'unique pompe réversible 23 décrite ci-dessus).

Cet urinoir mobile Ψ à rinçage autonome détecte E1, par l'intermédiaire du détecteur 3 d'événement sélectif, la présence du méat urinaire à proximité (à une distance prédéterminée) du collecteur portable 1. Le premier signal d'alerte α propre à la présence du méat urinaire à proximité du collecteur portable 1 est donc envoyé E2 par le détecteur 3 à l'unité centrale 6 d'intelligence artificielle du système fluidique 2. En réponse à ce premier signal d'alerte α propre à la présence du méat urinaire à proximité du collecteur portable 1, l'unité centrale 6 met E3 le système fluidique 2 dans le deuxième état S2 de son fonctionnement : une dépression aspirante apte à vidanger le collecteur portable 1 est alors induite par la pompe réversible 23.

De préférence, en même temps (c'est-à-dire, en réponse à ce premier signal d'alerte α propre à la présence du méat urinaire à proximité du collecteur portable 1), l'unité centrale 6 met E4 le système fluidique 2 dans le troisième état S3 de son fonctionnement : l'émetteur acoustique 26 est alors activé pour créer un environnement sonore propre à un ruissellement d'eau. L'utilisateur ainsi déstressé urine dans le collecteur portable 1.

Trente secondes après le déclenchement du deuxième état S2 de fonctionnement système fluidique 2, l'unité centrale 6 :
- arrête E40 le troisième état S3 de fonctionnement du système fluidique 2 pour des raisons d'économie d'énergie, et
- arrête E30 le deuxième état S2 de fonctionnement du système fluidique 2 en mettant à l'arrêt la pompe réversible 25 : cette dernière ne produisant donc plus de la dépression aspirante dans le deuxième circuit fluidique 22, le vidange forcé du collecteur portable 1 s'arrête.

Une fois uriné, l'utilisateur ainsi soulagé éloigne le collecteur portable 1 de son méat urinaire, puis range le collecteur portable 1, par exemple, en l'accrochant sur un support tel qu'un fauteuil roulant. Le détecteur 3 d'événement sélectif détecte E10 l'absence du méat urinaire à proximité (à une distance prédéterminée) du collecteur portable 1. Un autre premier signal d'alerte α propre à l'absence du méat urinaire à proximité du collecteur portable 1 est donc envoyé E20 par le détecteur 3 à l'unité centrale 6 d'intelligence artificielle du système fluidique 2. En réponse à cet autre premier signal d'alerte α propre à l'absence du méat urinaire à proximité du collecteur portable 1, l'unité centrale 6 met E5 le système fluidique 2 dans le premier état S1 de son fonctionnement pour rincer le collecteur portable 1 (à l'aide de la pompe réversible 23 qui pressurise le premier circuit fluidique 21 à ces fins) pendant un (premier) laps de temps prédéterminé : par exemple, pendant dix secondes. Une fois ces dix secondes écoulées, l'unité centrale 6 :
- arrête E50 le premier état S1 de fonctionnement du système fluidique 2 (en ordonnant une mise à l'arrêt de la première pompe 24), et
- met E3 le système fluidique 2 de nouveau dans le deuxième état S2 de son fonctionnement : une dépression aspirante apte à vidanger les eaux usées (le liquide de rinçage et/ou un mélange de l'urine avec le liquide de rinçage) du collecteur portable 1 est alors induite par la pompe réversible 23.

Après un autre (deuxième) laps de temps, par exemple, dix secondes après le déclenchement du deuxième état S2 de fonctionnement système fluidique 2, l'unité centrale 6 arrête E30 le deuxième état S2 de fonctionnement du système fluidique 2 (en ordonnant une mise à l'arrêt de la pompe réversible 23).

Dès que l'utilisateur souhaite uriner de nouveau, ce cycle recommence.

## Revendications

1. Urinoir mobile (Ψ) à rinçage autonome comportant un collecteur portable (1) adapté à recevoir l'urine et relié à un système fluidique (2) comprenant :
• un premier circuit fluidique (21) relié au collecteur portable (1) et comprenant un liquide de rinçage, le premier circuit fluidique (21) étant adapté à amener le liquide de rinçage dans le collecteur portable (1),
• un deuxième circuit fluidique (22) relié au collecteur portable (1) et adapté à vidanger le collecteur portable (1),
le système fluidique (2) étant adapté :
• dans un premier état (S1) de son fonctionnement, à pressuriser le liquide de rinçage dans le premier circuit fluidique (21) et à délivrer ce liquide de rinçage dans le collecteur portable (1),
• dans un deuxième état (S2) de son fonctionnement distinct du premier état (S1) de son fonctionnement, à induire, dans le deuxième circuit fluidique (22), une dépression aspirante apte à vidanger le collecteur portable (1),
le système fluidique (2) comportant une première vanne (210) disposée dans le premier circuit fluidique (21), cette première vanne (210) étant ouverte lorsque le système fluidique (2) se trouve dans le premier état (S1) de son fonctionnement, le premier circuit fluidique (21) est flexible, le deuxième circuit fluidique (22) est flexible, **caractérisé en ce que** la première vanne (210) est adaptée à réguler un débit de rinçage à travers le premier circuit fluidique (21), **en ce que** la première vanne (210) est fermée lorsque le système fluidique (2) se trouve dans le deuxième état (S2) de son fonctionnement, **en ce que** le système fluidique (2) comporte une deuxième vanne (220) disposée dans le deuxième circuit fluidique (22) et adaptée à réguler un débit de vidange à travers le deuxième circuit fluidique (22), la deuxième vanne (220) étant :
• fermée lorsque le système fluidique (2) se trouve dans le premier état (S1) de son fonctionnement, et
• ouverte lorsque le système fluidique (2) se trouve dans le deuxième état (S2) de son fonctionnement,
et **en ce que** le système fluidique (2) comporte en outre une pompe réversible (23) adaptée à coopérer avec la première vanne (210) et la deuxième vanne (220), la pompe réversible (23) étant apte à :
• pressuriser le liquide de rinçage dans le premier circuit fluidique (21) lorsque le système fluidique (2) se trouve dans le premier état (S1) de son fonctionnement et
• induire la dépression aspirante dans le deuxième circuit fluidique (22) lorsque le système fluidique (2) se trouve dans le deuxième état (S2) de son fonctionnement.

2. Urinoir mobile (Ψ) à rinçage autonome selon la revendication 1, **caractérisé en ce qu'**il comporte un détecteur (3) d'événement sélectif adapté à envoyer un signal d'alerte (α) au système fluidique (2) en cas de détection d'un événement sélectif, et **en ce que** le système fluidique (2) est adapté à se mettre dans le deuxième état (S2) de son fonctionnement à réception du signal d'alerte (α) provenant du détecteur (3) d'événement sélectif.

3. Urinoir mobile (Ψ) à rinçage autonome selon la revendication 1 ou 2, **caractérisé en ce qu'**il comporte :
• un contenu multimédia (4) comprenant un enregistrement sonore propre à un ruissellement d'eau,
• une interface d'accès (5) à ce contenu multimédia (4).

4. Urinoir mobile (Ψ) à rinçage autonome selon l'une quelconque des revendications 1 à 3, **caractérisé en ce que** le système fluidique (2) comporte un émetteur acoustique (26) adapté, dans son état actif, à générer un environnement sonore propre à un ruissellement d'eau, et **en ce que** le système fluidique (2) est adapté, dans un troisième état (S3) de son fonctionnement distinct du premier état (S1) de son fonctionnement, à activer l'émetteur acoustique (26).

5. Urinoir mobile (Ψ) à rinçage autonome selon l'une quelconque des revendications 1 à 4, **caractérisé en ce que** le système fluidique (2) comporte une unité centrale (6) d'intelligence artificielle et **en ce que** l'unité centrale (6) est adaptée à commander tous les états (S1), (S2), (S3) de fonctionnement du système fluidique (2).

6. Urinoir mobile (Ψ) à rinçage autonome selon la revendication 5, **caractérisé en ce que** le premier circuit fluidique (21) comporte :
• un réservoir (2100) adapté à stocker le liquide de rinçage, et
• un premier capteur lié à ce réservoir (2100) et adapté à émettre un deuxième signal d'alerte lorsqu'un niveau du liquide de rinçage est inférieur à un premier seuil prédéterminé.

7. Urinoir mobile (Ψ) à rinçage autonome selon la revendication 6, **caractérisé en ce que** le deuxième circuit fluidique (22) comporte :
• un bac de stockage (2200) adapté à stocker des eaux usés constitués de l'urine mélangée avec le liquide de rinçage, et
• un deuxième capteur lié à ce bac de stockage (2200) et adapté à émettre un troisième signal d'alerte lorsqu'un niveau des eaux usées est supérieur à un deuxième seuil prédéterminé distinct du premier seuil prédéterminé.

8. Urinoir mobile (Ψ) à rinçage autonome selon la revendication 7, **caractérisé en ce que** l'unité centrale (6) d'intelligence artificielle comporte un amplificateur apte :
• à recevoir l'un au moins parmi les signaux d'alerte suivants : (a) le deuxième signal d'alerte provenant du premier capteur ; (b) le troisième signal d'alerte provenant du deuxième capteur, et
• à amplifier l'un au moins parmi les signaux d'alerte suivants : (a) le deuxième signal d'alerte provenant du premier capteur ; (b) le troisième signal d'alerte provenant du deuxième capteur.

9. Urinoir mobile (Ψ) à rinçage autonome selon la revendication 7, **caractérisé en ce que** l'unité centrale (6) d'intelligence artificielle comporte un module de communication apte :
• à recevoir l'un au moins parmi les signaux d'alerte suivants : (a) le deuxième signal d'alerte provenant du premier capteur ; (b) le troisième signal d'alerte provenant du deuxième capteur,
• à transmettre l'un au moins parmi les signaux d'alerte suivants : (a) le deuxième signal d'alerte provenant du premier capteur ; (b) le troisième signal d'alerte provenant du deuxième capteur, vers un récepteur distant.

10. Urinoir mobile (Ψ) à rinçage autonome selon l'une quelconque des revendications 1 à 9, **caractérisé en ce que** le deuxième circuit fluidique (22) comporte un module d'analyse adapté à identifier au moins une caractéristique de l'urine.

11. Urinoir mobile (Ψ) à rinçage autonome selon la revendication 10, **caractérisé en ce que** ce module d'analyse est disposé entre le collecteur portable (1) et la pompe réversible (23).

12. Urinoir mobile (Ψ) à rinçage autonome selon la revendication 10 ou 11, **caractérisé en ce que** le deuxième circuit fluidique (22) comporte une conduite de dérivation entre le collecteur portable (1) et la pompe réversible (23), et **en ce que** le module d'analyse est installé dans cette conduite de dérivation.

13. Urinoir mobile (Ψ) à rinçage autonome selon la revendication 12, **caractérisé en ce que** la conduite de dérivation est à usage unique.

14. Urinoir mobile (Ψ) à rinçage autonome selon l'une quelconque des revendications 10 à 13, **caractérisé en ce que** le module d'analyse est à usage unique.

15. Utilisation de l'urinoir mobile à rinçage autonome selon l'une quelconque des revendications 1 à 14 dans l'un au moins des véhicules suivants : (a) véhicule automobile ; (b) fauteuil roulant ; (c) lit d'hôpital adapté à être déplacé ; (d) aéronef.

## Patentansprüche

1. Mobiles Urinal (Ψ) mit autonomer Spülung, umfassend einen tragbaren Kollektor (1), der zur Aufnahme von Urin geeignet ist und mit einem Fluidsystem (2) verbunden ist, das Folgendes umfasst:
• einen ersten Fluidkreislauf (21), der mit dem tragbaren Kollektor (1) verbunden ist und eine Spülflüssigkeit umfasst, wobei der erste Fluidkreislauf (21) dafür geeignet ist, um die Spülflüssigkeit in den tragbaren Kollektor (1) zu bringen,
• einen zweiten Fluidkreislauf (22), der mit dem tragbaren Kollektor (1) verbunden und zum Entleeren des tragbaren Kollektors (1) geeignet ist,
wobei das Fluidsystem (2) dafür geeignet ist:
• in einem ersten Betriebszustand (S1) die Spülflüssigkeit im ersten Fluidkreislauf (21) unter Druck zu setzen und diese Spülflüssigkeit dem tragbaren Kollektor (1) zuzuführen,
• in einem zweiten Betriebszustand (S2), der sich vom ersten Betriebszustand (S1) unterscheidet, ein Saugvakuum, das in der Lage ist, den tragbaren Kollektor (1) zu entleeren, im zweiten Fluidkreislauf (22) zu induzieren,
wobei das Fluidsystem (2) ein erstes Ventil (210) umfasst, das sich im ersten Fluidkreislauf (21) befindet, wobei das erste Ventil (210) geöffnet ist, wenn sich das Fluidsystem (2) in seinem ersten Betriebszustand (S1) befindet, wobei der erste Fluidkreislauf (21) flexibel ist, der zweite Fluidkreislauf (22) flexibel ist, **dadurch gekennzeichnet, dass** das erste Ventil (210) geeignet ist, um einen Spülstrom durch den ersten Fluidkreislauf (21) zu regeln, so dass das erste Ventil (210) geschlossen ist, wenn sich das Fluidsystem (2) in dem zweiten Betriebszustand befindet (S2), **dass** das Fluidsystem (2) ein zweites Ventil (220) umfasst, das sich in dem zweiten Fluidkreislauf (22) befindet und dafür geeignet ist, einen Entleerungsdurchfluss über den zweiten Fluidkreislauf (22) zu regulieren, wobei das zweite Ventil (220):
• geschlossen ist, wenn sich das Fluidsystem (2) in seinem ersten Betriebszustand (S1) befindet, und
• geöffnet ist, wenn sich das Fluidsystem (2) in seinem zweiten Betriebszustand (S2) befindet,
und **dass** das Fluidsystem (2) ferner eine reversible Pumpe (23) umfasst, die geeignet ist, mit dem ersten Ventil (210) und dem zweiten Ventil (220) zusammenzuwirken, wobei die reversible Pumpe (23) dafür geeignet ist:
• die Spülflüssigkeit im ersten Fluidkreislauf (21) unter Druck zu setzen, wenn sich das Fluidsystem (2) in seinem ersten Betriebszustand (S1) befindet, und
• das Saugvakuum im zweiten Fluidkreislauf (22) zu induzieren, wenn sich das Fluidsystem (2) in seinem zweiten Betriebszustand (S2) befindet.

2. Mobiles Urinal (Ψ) mit autonomer Spülung nach Anspruch 1, **dadurch gekennzeichnet, dass** es einen selektiven Ereignisdetektor (3) umfasst, der geeignet ist, im Falle des Erkennens eines selektiven Ereignisses ein Alarmsignal (α) an das Fluidsystem (2) zu senden, und **dass** das Fluidsystem (2) geeignet ist, sich nach Empfang des Alarmsignals (α) vom selektiven Ereignisdetektor (3) in den zweiten Betriebszustand (S2) zu versetzen.

3. Mobiles Urinal (Ψ) mit autonomer Spülung nach Anspruch 1 oder 2, **dadurch gekennzeichnet, dass** es Folgendes umfasst:
• einen Multimedia-Inhalt (4), umfassend eine für den Wasserabfluss spezifische Tonaufzeichnung,
• eine Schnittstelle (5) für den Zugriff auf diesen Multimedia-Inhalt (4).

4. Mobiles Urinal (Ψ) mit autonomer Spülung nach einem der Ansprüche 1 bis 3, **dadurch gekennzeichnet, dass** das Fluidsystem (2) einen akustischen Sender (26) umfasst, der in seinem aktiven Zustand geeignet ist, eine für einen Wasserabfluss spezifische Schallumgebung zu erzeugen, und **dass** das Fluidsystem (2) in einem dritten Betriebszustand (S3), der sich vom ersten Betriebszustand (S1) unterscheidet, geeignet ist, um den akustischen Sender (26) zu aktivieren.

5. Mobiles Urinal (Ψ) mit autonomer Spülung nach einem der Ansprüche 1 bis 4, **dadurch gekennzeichnet, dass** das Fluidsystem (2) eine Zentraleinheit (6) künstlicher Intelligenz umfasst und **dass** die Zentraleinheit (6) geeignet ist, um alle Betriebszustände (S1), (S2), (S3) des Fluidsystems (2) zu steuern.

6. Mobiles Urinal (Ψ) mit autonomer Spülung nach Anspruch 5, **dadurch gekennzeichnet, dass** der erste Fluidkreislauf (21) Folgendes umfasst:
• einen Tank (2100), der zum Speichern der Spülflüssigkeit geeignet ist, und
• einen ersten Sensor, der mit diesem Tank (2100) verbunden ist und geeignet ist, ein zweites Warnsignal auszusenden, wenn ein Niveau der Spülflüssigkeit unter einem ersten vorbestimmten Schwellenwert liegt.

7. Mobiles Urinal (Ψ) mit autonomer Spülung nach Anspruch 6, **dadurch gekennzeichnet, dass** der zweite Fluidkreislauf (22) Folgendes umfasst:
• einen Lagertank (2200), der zum Speichern von Abwasser geeignet ist, das aus Urin besteht, der mit der Spülflüssigkeit vermischt ist, und
• einen zweiten Sensor, der mit diesem Speichertank (2200) verbunden ist und geeignet ist, ein drittes Warnsignal auszusenden, wenn ein Abwasserpegel höher als ein zweiter vorgegebener Schwellenwert ist, der sich von dem ersten vorgegebenen Schwellenwert unterscheidet.

8. Mobiles Urinal (Ψ) mit autonomer Spülung nach Anspruch 7, **dadurch gekennzeichnet, dass** die Zentraleinheit (6) für künstliche Intelligenz einen geeigneten Verstärker umfasst:
• um mindestens eines der folgenden Warnsignale zu empfangen: (a) das zweite Warnsignal des ersten Sensors; (b) das dritte Warnsignal des zweiten Sensors, und
• um mindestens eines der folgenden Warnsignale zu verstärken: (a) das zweite Warnsignal des ersten Sensors; (b) das dritte Warnsignal des zweiten Sensors.

9. Mobiles Urinal (Ψ) mit autonomer Spülung nach Anspruch 7, **dadurch gekennzeichnet, dass** die Zentraleinheit (6) für künstliche Intelligenz ein geeignetes Kommunikationsmodul umfasst:
• um mindestens eines der folgenden Warnsignale zu empfangen: (a) das zweite Warnsignal des ersten Sensors; (b) das dritte Warnsignal des zweiten Sensors,
• um mindestens eines der folgenden Warnsignale zu übertragen: (a) das zweite Warnsignal vom ersten Sensor; (b) das dritte Warnsignal vom zweiten Sensor an einen Fernempfänger.

10. Mobiles Urinal (Ψ) mit autonomer Spülung nach einem der Ansprüche 1 bis 9, **dadurch gekennzeichnet, dass** der zweite Fluidkreislauf (22) ein Analysemodul umfasst, das geeignet ist, um mindestens eine Eigenschaft des Urins zu identifizieren.

11. Mobiles Urinal (Ψ) mit autonomer Spülung nach Anspruch 10, **dadurch gekennzeichnet, dass** sich dieses Analysemodul zwischen dem tragbaren Kollektor (1) und der reversiblen Pumpe (23) befindet.

12. Mobiles Urinal (Ψ) mit autonomer Spülung nach Anspruch 10 oder 11, **dadurch gekennzeichnet, dass** der zweite Fluidkreislauf (22) eine Bypassleitung zwischen dem tragbaren Kollektor (1) und der reversiblen Pumpe (23) umfasst, und **dass** das Analysemodul in dieser Bypassleitung installiert ist.

13. Mobiles Urinal (Ψ) mit autonomer Spülung nach Anspruch 12, **dadurch gekennzeichnet, dass** die Bypassleitung nur für den einmaligen Gebrauch bestimmt ist.

14. Mobiles Urinal (Ψ) mit autonomer Spülung nach einem der Ansprüche 10 bis 13, **dadurch gekennzeichnet, dass** das Analysemodul nur für den einmaligen Gebrauch bestimmt ist.

15. Verwendung des mobilen Urinals mit autonomer Spülung nach einem der Ansprüche 1 bis 14 in mindestens einem der folgenden Fahrzeuge: (a) Kraftfahrzeug; (b) Rollstuhl; (c) bewegliches Krankenhausbett; (d) Luftfahrzeug.

## Claims

1. Self-rinsing mobile urinal (Ψ) having a portable collector (1) adapted to receive urine and connected to a fluid system (2) comprising:
• a first fluid circuit (21) connected to the portable collector (1) and comprising a rinsing fluid, the first fluid circuit (21) being adapted to cause the rinsing liquid in the portable collector (1),
• a second fluid circuit (22) connected to the portable collector (1) and adapted to drain the portable collector (1),
the fluid system (2) being adapted:
• in a first state (S1) of its operation, pressurizing the rinsing liquid in the first fluid circuit (21) and delivering this rinsing liquid to the portable collector (1),
• in a second state (S2) of its operation distinct from the first state (S1) of its operation, to induce in the second fluid circuit (22), a suction depression adapted to empty the portable collector (1),
the fluid system (2) comprising a first valve (210) disposed in the first fluid circuit (21), this first valve (210) being open when the fluid system (2) is in the first state (S1) of its operation the first fluid circuit (21) is flexible, the second fluid circuit (22) is flexible, **characterized in that** the first valve (210) is adapted to regulate a rinsing flow rate through the first fluid circuit (21), **in that** the first valve (210) is closed when the fluid system (2) is in the second state (S2) of its operation, **in that** the fluid system (2) has a second valve (220) arranged in the second fluid circuit (22) and adapted to regulate an emptying flow rate through the second fluid circuit (22), the second valve (220) being:
• closed when the fluid system (2) is in the first state (S1) of its operation, and
• open when the fluid system (2) is in the second state (S2) of its operation,
and **in that** the fluid system (2) further comprises a reversible pump (23) adapted to engage with the first valve (210) and the second valve (220), the reversible pump (23) being able to:
• pressurize the rinsing liquid in the first fluid circuit (21) when the fluid system (2) is in the first state (S1) for its operation and
• induce the vacuum suction in the second fluid circuit (22) when the fluid system (2) is in the second state (S2) of its operation.

2. Self-rinsing mobile urinal (Ψ) according to claim 1, **characterized in that** it comprises a selective event detector (3) adapted to send an alert signal (α) to the fluid system (2) in case of detection of a selective event, and **in that** the fluid system (2) is adapted to enter the second state (S2) of its operation on receipt of the alert signal (α) coming from the selective event detector (3).

3. Self-rinsing mobile urinal (Ψ) according to claim 1 or 2, **characterized in that** it comprises:
• multimedia content (4) including a sound recording specific to water running,
• An access interface (5) to this multimedia content (4).

4. Self-rinsing mobile urinal (Ψ) according to any one of claims 1 to 3, **characterized in that** the fluid system (2) comprises an acoustic transmitter (26) adapted, in its active state, to generate a sound environment specific to water running, and **in that** the fluid system (2) is adapted, in a third state (S3) of its operation distinct from the first state (S1) of its operation, to activate the acoustic transmitter (26).

5. Self-rinsing mobile urinal (Ψ) according to any one of claims 1 to 4, **characterized in that** the fluid system (2) comprises a central artificial intelligence unit (6) and **in that** the central unit (6) is adapted to control all operation states (S1), (S2), (S3) of the fluid system (2).

6. Self-rinsing mobile urinal (Ψ) according to claim 5, **characterized in that** the first fluid circuit (21) comprises:
• a tank (2100) adapted to store the rinsing liquid, and
• a first sensor linked to the reservoir (2100) and adapted to emit a second alert signal when a level of the rinsing liquid is below a first predetermined threshold.

7. Self-rinsing mobile urinal (Ψ) according to claim 6, **characterized in that** the second fluid circuit (22) comprises:
• a storage tank (2200) adapted to store the waste water consisting of urine mixed with the rinsing liquid, and
• a second sensor linked to this storage tank (2200) and adapted to output a third alert signal when a level of the wastewater is above a second predetermined threshold separate from the first predetermined threshold.

8. Self-rinsing mobile urinal (Ψ) according to claim 7, **characterized in that** the central artificial intelligence unit (6) has an amplifier capable of:
• receiving the at least one of the following alert signals: (a) the second alert signal from the first sensor; (b) the third alert signal from the second sensor, and
• transmitting the at least one of the following alert signals: (a) the second alert signal from the first sensor; (b) the third alert signal from the second sensor.

9. Self-rinsing mobile urinal (Ψ) according to claim 7, **characterized in that** the central artificial intelligence unit (6) comprises a communication module capable of:
• receiving the at least one of the following alert signals: (a) the second alert signal from the first sensor; (b) the third alert signal from the second sensor,
• transmitting the at least one of the following alert signals: (a) the second alert signal from the first sensor; (b) the third alert signal from the second sensor to a remote receiver.

10. Self-rinsing mobile urinal (Ψ) according to any one of claims 1 to 9, **characterized in that** the second fluid circuit (22) comprises an analysis module adapted to identify at least one characteristic of the urine.

11. Self-rinsing mobile urinal (Ψ) according to claim 10, **characterized in that** this analysis module is disposed between the portable collector (1) and the reversible pump (23).

12. Self-rinsing mobile urinal (Ψ) according to claim 10 or 11, **characterized in that** the second fluid circuit (22) comprises a bypass line between the portable collector (1) and the reversible pump (23), and **in that** the analysis module is installed in this bypass line.

13. Self-rinsing mobile urinal (Ψ) according to claim 12, **characterized in that** the bypass line is for single use.

14. Self-rinsing mobile urinal (Ψ) according to any one of claims 10 to 13, **characterized in that** the analysis module is for single use.

15. Use of the self-rinsing mobile urinal according to any one of claims 1 to 14 in at least one of the following vehicles: (a) a motor vehicle; (b) wheelchair; (c) movable hospital bed; (d) aircraft.
